# EUROPÄISCHE PATENTANMELDUNG

(11) **EP 4 001 692 A1**
(43) Veröffentlichungstag der Anmeldung: **25.05.2022**
(21) Anmeldenummer: 21206181.6
(22) Anmeldetag: 03.11.2021
(51) Int. Cl.: F16F 13/14

(54) **LAGER**

(30) Priorität: 17.11.2020 DE 102020130271
(71) Anmelder: Trelleborg Antivibration Solutions Germany GmbH, 16727 Velten (DE)
(72) Erfinder: Cordts, Detlef, 16348 Wandlitz (DE)
(74) Vertreter: Reiser & Partner Patentanwälte mbB

(57) **Zusammenfassung**

Lager (1), umfassend einen Kern (2) und ein Gehäuse (3), wobei zwischen Kern (2) und Gehäuse (3) zumindest ein Elastomerkörper (4) angeordnet ist, wobei der Kern (2), das Gehäuse (3) und der Elastomerkörper (4) einen mit Hydraulikflüssigkeit befüllten Arbeitsraum (5) einschließen, wobei in dem Arbeitsraum (5) ein Zusatzkörper (6) angeordnet ist.

## Beschreibung

Die Erfindung betrifft ein Lager, umfassend einen Kern und ein Gehäuse, wobei zwischen Kern und Gehäuse zumindest ein Elastomerkörper angeordnet ist, wobei der Kern, das Gehäuse und der Elastomerkörper einen mit Hydraulikflüssigkeit befüllten Arbeitsraum einschließen.

In Schienenfahrzeugen kommen derartige Lager im Bereich des Drehgestells zum Einsatz. Beispielsweise werden derartige Lager zwischen dem Radsatz und dem Drehgestell eines Schienenfahrzeugs eingesetzt, wobei das Lager zusammen mit der zwischen Radsatz und Drehgestell angeordneten Primärfederung ein schwingungstechnisches System bildet. Das mit Hydraulikflüssigkeit befüllte Lager ermöglicht dabei eine Isolierung oder Dämpfung der von dem Radsatz in das Drehgestell eingebrachten Schwingungen.

Eine spezielle Anwendung stellen in diesem Zusammenhang hydraulische Achslenkerlager dar. Hydraulische Achslenkerlagers führen den Radsatz und ermöglichen dabei eine Einstellbewegung des Radsatzes bei Kurvenfahrt. Hierzu ist das Achslenkerlager so ausgebildet, dass sich eine frequenzabhängige Steifigkeit einstellt, wobei das Lager bei höherfrequenten Anregungen hart und bei niederfrequenten Anregungen weich ist, wobei unter höherfrequenten Anregungen Frequenzen von mehr als 2 Hertz verstanden werden können. Die höhere Steifigkeit bei höherfrequenten Anregungen stellt einen stabilen Lauf des Fahrzeugs sicher, während die niedrige Steifigkeit eine radiale Auslenkbewegung des Radsatzes ermöglicht, was mit einer verschleiß- und geräuscharmen Kurvenfahrt des Fahrzeugs einhergeht.

Aufgrund der großen mechanischen Kräfte, die auf Drehgestelle von Schienenfahrzeugen einwirken, sind die für Schienenfahrzeuge eingesetzten Lager verhältnismäßig voluminös. Dies führt dazu, dass der Arbeitsraum des Lagers ein großes Volumen aufweist, in das eine entsprechend große Menge Hydraulikflüssigkeit eingefüllt ist. Die gewünschten schwingungsdämpfenden oder schwingungsisolierenden Eigenschaften des Lagers stellen sich dabei dann ein, wenn der Arbeitsraum vollständig mit Hydraulikflüssigkeit befüllt ist und der Arbeitsraum keine oder nicht nennenswerte Anteile von kompressiblen Gasen enthält.

Je nach Einsatzgebiet sind die Lager dabei sehr großen Temperaturschwankungen ausgesetzt. Dabei ist denkbar, Schienenfahrzeuge bei Temperaturen zwischen +40 °C und -40 °C einzusetzen. Das Lager der eingangs genannter Art weist dabei Komponenten aus verschiedenen Werkstoffen auf. Der Kern und das Gehäuse bestehen zumeist aus Metall und der Elastomerkörper aus einem gummielastischen Werkstoff. Als Hydraulikflüssigkeit kommt häufig ein Hydrauliköl, beispielsweise auf der Basis von Polyglykol, zum Einsatz. Derartige Hydrauliköle weisen aber einen deutlich größeren Volumenausdehnungskoeffizienten als der des Elastomermaterials oder der des metallischen Werkstoffs auf. Im Vergleich zu dem Elastomermaterial ist der Volumenausdehnungskoeffizient von Hydrauliköl beispielsweise etwa doppelt so groß und im Vergleich zu einem Stahlwerkstoff sogar zwanzigmal so groß.

Aus Gründen der einfachen Herstellbarkeit wird die Hydraulikflüssigkeit zumeist drucklos in das Hydrolager eingefüllt. Bei einem Einsatz bei sehr tiefen Temperaturen kann es daher vorkommen, dass sich das Volumen der Hydraulikflüssigkeit signifikant verkleinert und dass das freiwerdende Volumen durch Ausdehnen von im Arbeitsraum vorhandenen Gasblasen oder durch verdampfte Hydraulikflüssigkeit eingenommen wird. Je nach Werkstoffwahl der eingesetzten Komponenten und der Temperaturen kann dabei die Hydraulikflüssigkeit beispielsweise etwa 2 % an Volumen verlieren, wobei dieser Raum durch ein entsprechendes Volumen kompressiblen Gases eingenommen wird. Dadurch kann sich die Steifigkeit des Lagers in Abhängigkeit der Anregungsamplituden ändern. Beispielsweise ist es denkbar, dass das Lager einen unerwünschten Freiweg aufweist, bevor es anspricht.

Um diesem Problem zu begegnen, ist es aus der EP 2 978 993 B1 bekannt, eine Ausgleichskammer vorzusehen, welche einen drucklosen Volumenausgleich ermöglicht. Das Lager ist allerdings verhältnismäßig komplex.

Der Erfindung liegt die Aufgabe zugrunde, ein Lager bereitzustellen, welches über einen großen Temperaturbereich weitgehend gleichbleibende Lagereigenschaften aufweist.

Diese Aufgabe wird mit den Merkmalen von Anspruch 1 gelöst. Auf vorteilhafte Ausgestaltungen nehmen die Unteransprüche Bezug.

Das erfindungsgemäße Lager umfasst einen Kern und ein Gehäuse, wobei zwischen Kern und Gehäuse zumindest ein Elastomerkörper angeordnet ist, wobei der Kern, das Gehäuse und der Elastomerkörper einen mit Hydraulikflüssigkeit befüllten Arbeitsraum einschließen, wobei in dem Arbeitsraum zumindest ein Zusatzkörper angeordnet ist.

Der Zusatzkörper ist dabei ein Festkörper, welcher im schwingungstechnischen Sinne inkompressibel ist. Dabei verkleinert der Zusatzkörper das für die Hydraulikflüssigkeit zur Verfügung stehende Volumen des Arbeitsraums. Die Hydraulikflüssigkeit erfährt dabei nach wie vor recht starke Änderungen des Volumens in Abhängigkeit der Umgebungstemperatur. Durch das geringere Volumen ergibt sich aber auch bei sehr starken Temperaturschwankungen nur ein geringes Volumen, welches durch kompressible Gase eingenommen wird. Daher weist das Lager auch bei sehr starken Temperaturschwankungen die vorbestimmten schwingungstechnischen Eigenschaften auf.

Das Gehäuse kann als Hülse ausgebildet sein, welche den Kern mit Abstand umgibt. Bei dieser Ausgestaltung ist das Lager als Hydrobuchse ausgebildet. Dabei ist das Gehäuse meist röhrenförmig ausgebildet und der Kern erstreckt sich koaxial durch das Gehäuse hindurch. Derartige Hydrobuchsen weisen konstruktionsbedingt einen relativ großvolumigen Arbeitsraum auf, der durch den erfindungsgemäßen Zusatzkörper vorteilhaft verkleinert werden kann, ohne dass dabei Anpassungen an dem Gehäuse oder dem Kern vorgenommen werden müssen.

Vorzugsweise sind aus dem Arbeitsraum zwei Kammern ausgebildet, welche über eine Einrichtung strömungsleitend miteinander verbunden sind. Bei dieser Ausgestaltung ist der Arbeitsraum in zwei Kammern unterteilt, wobei beide Kammern mit Hydraulikflüssigkeit befüllt sind und wobei die Hydraulikflüssigkeit über die Einrichtung von einer Kammer in die andere Kammer strömen kann. Die Einrichtung kann beispielsweise als Drossel ausgebildet sein. Dabei ist vorzugsweise jeder Kammer ein Zusatzkörper zugeordnet. Weiter vorzugsweise weisen beide Zusatzkörper ein übereinstimmendes Volumen auf, so dass beide Kammern im unbelasteten Zustand mit einer vergleichbaren Menge Hydraulikflüssigkeit befüllt sind.

Aus dem Elastomerkörper kann an jeder Stirnseite des Gehäuses ein ringförmiger Abschnitt ausgebildet sein, der sich jeweils von dem Kern zum Gehäuse erstreckt. Dabei kann der Abschnitt jeweils radial oder schräg verlaufend ausgebildet sein. Es ist auch denkbar, dass jeder Abschnitt separat ausgebildet ist, so dass das Lager zwei Elastomerkörper aufweist. Ebenso ist denkbar, dass beide Abschnitte aus einem einstückig und materialeinheitlich ausgebildeten Elastomerkörper ausgebildet sind. In diesem Zusammenhang ist insbesondere denkbar, dass der Elastomerkörper an der Innenwand des Gehäuses und außenumfangsseitig an dem Kern angeordnet ist. Bei dieser Ausgestaltung ist der Arbeitsraum durch den Elastomerkörper begrenzt, wobei der Elastomerkörper eine Auskleidung bildet.

Der Zusatzkörper kann aus Kunststoff ausgebildet sein. In diesem Zusammenhang ist insbesondere denkbar, dass als Kunststoff ein mit der Hydraulikflüssigkeit verträglicher Kunststoff ausgewählt wird. In Bezug auf ein Hydrauliköl aus der Gruppe der Polyglykole ist dabei insbesondere denkbar, den Zusatzkörper aus Polyetheretherketon (PEEK) oder aus Polyoxymethylen (POM) auszubilden. Ein aus Kunststoff ausgebildeter Zusatzkörper weist ein geringes Gewicht und damit nur einen sehr geringen Einfluss auf das schwingungstechnische Verhalten des Lagers aus.

Der Zusatzkörper kann aus metallischem Werkstoff ausgebildet sein. In diesem Zusammenhang ist insbesondere denkbar, den Zusatzkörper aus demselben Material auszubilden wie den Kern oder das Gehäuse.

Der Zusatzkörper ist vorzugsweise an dem Kern oder an dem Gehäuse befestigt. Dadurch kann der Einfluss des Zusatzkörpers auf das dynamische Verhalten des Lagers minimiert werden. Gleichzeitig kann verhindert werden, dass der Zusatzkörper hydrodynamische Komponenten, wie Düsen, Ventile oder dergleichen, zusetzt, sofern solche an dem Lager vorgesehen werden. Der Zusatzkörper kann dabei kraftschlüssig oder formschlüssig an dem Kern oder an dem Gehäuse festgelegt sein. Es ist beispielsweise auch denkbar, dass der Zusatzkörper mit dem Material des Elastomerkörpers überzogen ist und dadurch an dem Kern oder an dem Gehäuse festgelegt ist.

Der Zusatzkörper kann zumindest teilweise ringförmig ausgebildet sein. Insbesondere wenn das Lager als Hydrobuchse ausgestaltet ist, erstreckt sich der Zusatzkörper dann über einen Teil des Umfangs des Lagers. Gemäß einer vorteilhaften Ausgestaltung weist der Arbeitsraum zwei Kammern auf, welche jeweils mit einem Zusatzkörper versehen sind. Dabei erstreckt sich jeder Zusatzkörper vorzugsweise über den Umfangsbereich der Kammer, in der der Zusatzkörper angeordnet ist.

Der Zusatzkörper kann materialeinheitlich und einstückig aus dem Kern und/oder dem Gehäuse ausgebildet sein. Bei dieser Ausgestaltung weisen der Kern oder das Gehäuse einen Abschnitt auf, der in den Arbeitsraum hineinragt und dabei den Zusatzkörper bildet. Diese Ausgestaltung ist besonders einfach und kostengünstig herstellbar.

Der Zusatzkörper kann das für die Hydraulikflüssigkeit zur Verfügung stehende Volumen des Arbeitsraums um mindestens 50 % verkleinern. Sind zwei Kammern und zwei Zusatzkörper vorgesehen, verkleinert ein Zusatzkörper den für die Hydraulikflüssigkeit zur Verfügung stehende Raum einer Kammer vorzugsweise um mindestens 50 %. Vorzugsweise verkleinern die beiden Zusatzkörper den Raum der jeweiligen Kammer um ein übereinstimmendes Maß. Durch diese Ausgestaltung kann verhindert werden, dass sich bei sehr großen Temperaturdifferenzen ein signifikantes Volumen kompressibler Gase im Inneren des Arbeitsraums ansammelt.

Ein erfindungsgemäßes Drehgestell eines Schienenfahrzeugs umfasst zumindest einen Radsatz und zumindest eine Federanordnung, wobei die zumindest eine Federanordnung mit zumindest einem Lager wie zuvor beschrieben ausgerüstet ist.

Schienenfahrzeuge weisen beispielsweise im Vergleich zu Personenkraftwagen gewichtsbedingt groß dimensionierte Komponenten auf. Dies betrifft insbesondere das Drehgestell und die darin eingesetzten Lager. Dementsprechend entsteht zwischen dem Gehäuse und dem Kern des in einem Drehgestell eingesetzten Lagers ein verhältnismäßig großer Arbeitsraum, der mit Hydraulikflüssigkeit befüllt ist. Je nach Einsatzland sind Schienenfahrzeuge sehr großen Temperaturschwankungen ausgesetzt. Dies führt dazu, dass das Volumen der in den großvolumigen Arbeitsraum eingefüllten Hydraulikflüssigkeit stark schwankt. Bei tiefen Temperaturen führt dies dazu, dass neben der Hydraulikflüssigkeit ein signifikantes Volumen von kompressiblen Gasen eingenommen wird. Bei hohen Temperaturen wiederum dehnt sich die Hydraulikflüssigkeit aus, was zu einem starken Druckanstieg im Arbeitsraum führt. Dies hat zur Folge, dass das Lager bei niedrigen Außentemperaturen einen Freiweg aufweisen kann, bevor es anspricht, und bei hohen Außentemperaturen kann das Lager eine unerwünscht harte Charakteristik aufweisen.

Dadurch, dass das für die Hydraulikflüssigkeit zur Verfügung stehende Volumen bei dem erfindungsgemäßen Lager durch den Zusatzkörper verkleinert ist, verkleinert sich auch die Volumenschwankung der Hydraulikflüssigkeit bei Temperaturänderung. Dadurch weist das Lager über ein großes Temperaturspektrum gleichbleibende Lagereigenschaften auf.

Das Lager kann als Führungsbuchse fungieren. Führungsbuchsen kommen in der Primärfederung des Drehgestells zum Einsatz.

Einige Ausgestaltungen des erfindungsgemäßen Lagers werden nachfolgend anhand der Figuren näher erläutert. Diese zeigen, jeweils schematisch:
- Fig. 1: ein Lager im Schnitt;
- Fig. 2: ein Lager im Teilschnitt in dreidimensionaler Darstellung;
- Fig. 3: ein Radsatz eines Schienenfahrzeuges.

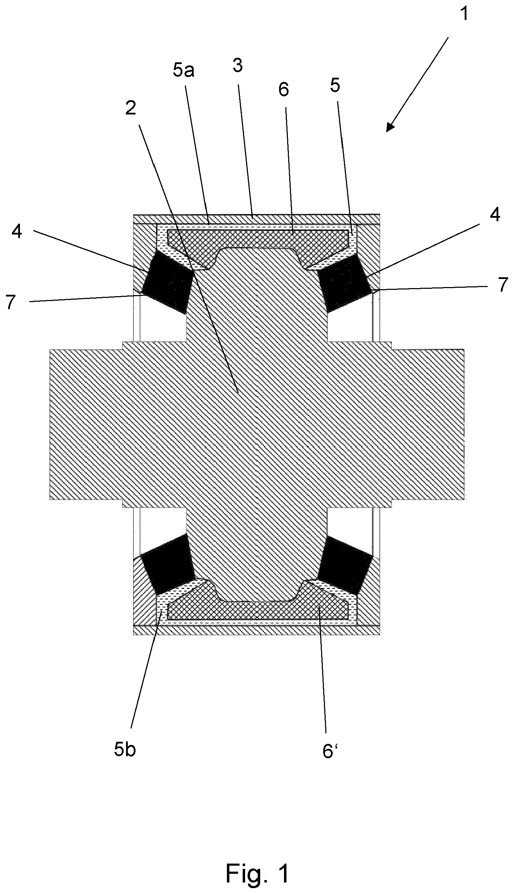

Figur 1 zeigt ein Lager 1, umfassend einen Kern 2 und ein Gehäuse 3, wobei zwischen Kern 2 und Gehäuse 3 ein Elastomerkörper 4 angeordnet ist. Bei der vorliegenden Ausgestaltung ist das Gehäuse 3 als Hülse ausgebildet, welche den Kern 2 mit Abstand umgibt. Aus dem Elastomerkörper 4 sind an jeder Stirnseite des Gehäuses 3 ringförmige Abschnitte 7 ausgebildet, welche sich jeweils von dem Kern 2 bis zum Gehäuse 3 erstrecken. Dementsprechend bildet das Lager 1 eine Hydrobuchse.

Der Kern 2, das Gehäuse 3 und der Elastomerkörper 4 schließen einen mit Hydraulikflüssigkeit befüllten Arbeitsraum 5 ein. Dabei ist der Elastomerkörper 4 so ausgebildet, dass der Arbeitsraum 5 durch den Elastomerkörper 4 begrenzt ist. Der Elastomerkörper 4 erstreckt sich über die Innenwand des Gehäuses 3 und außenumfangsseitig um den Kern 2. Bei der vorliegenden Ausgestaltung sind aus dem Arbeitsraum 5 zwei Kammern 5a, 5b ausgebildet, welche über den Umfang verteilt abgeordnet und über einen Steg voneinander getrennt sind. Die beiden Kammern 5a, 5b sind über eine Einrichtung (eine Drossel, hier nicht dargestellt) strömungsleitend miteinander verbunden.

In jeder Kammer 5a, 5b des Arbeitsraums 5 ist jeweils ein Zusatzkörper 6, 6' angeordnet. Bei der vorliegenden Ausgestaltung sind die Zusatzkörper 6, 6' aus metallischem Werkstoff ausgebildet. Alternativ ist denkbar, die Zusatzkörper 6, 6' aus Kunststoff auszubilden, wobei in diesem Fall insbesondere PEEK oder POM in Betracht kommt. Die Zusatzkörper 6, 6' sind bei der vorliegenden Ausgestaltung an dem Kern 2 befestigt. Dabei sind die Zusatzkörper 6, 6' über die Erstreckung der Kammern 5a, 5b in Umfangsrichtung abschnittsweise ringförmig ausgebildet. Die Befestigung der Zusatzkörper 6, 6' an dem Kern 2 erfolgt mittels einer Schraubverbindung. Alternativ kann die Befestigung aber auch stoffschlüssig durch Kleben oder Schweißen erfolgen. Ebenso ist denkbar, die Befestigung durch Klemmen oder über eine Nietverbindung herzustellen. Die Zusatzkörper 6, 6' sind so ausgebildet, dass das für die Hydraulikflüssigkeit zur Verfügung stehende Volumen jeder Kammer 5a, 5b des Arbeitsraums 5 um 40 % verkleinert ist.

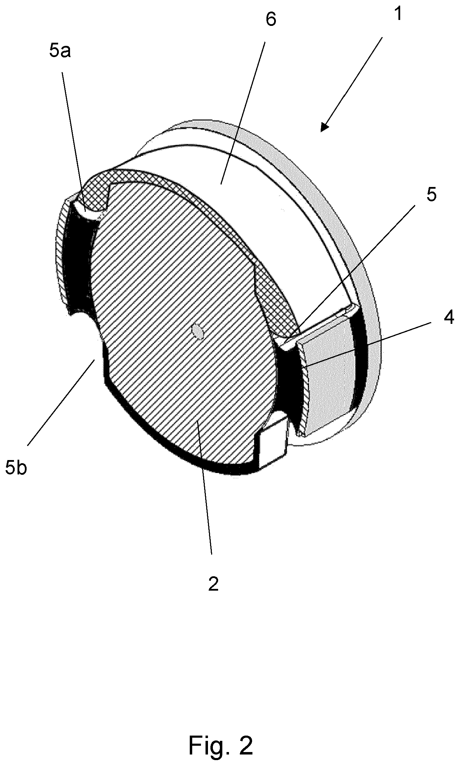

Figur 2 zeigt das Lager 1 gemäß Figur 1 im Teilschnitt in dreidimensionaler Darstellung. Zur besseren Übersicht ist das Gehäuse 3 nicht dargestellt und lediglich der in der Kammer 5a vorgesehene Zusatzkörper 6. Der in Kammer 5b vorgesehene Zusatzkörper 6' ist hingegen nicht dargestellt.

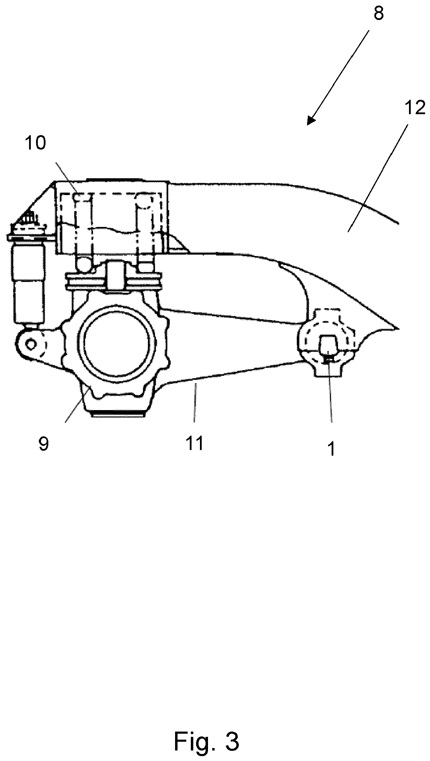

Figur 3 zeigt ein Drehgestell 8 eines Schienenfahrzeugs mit einem Radsatz 9 und einer Federanordnung 10. Die Federanordnung 10 ist mit einem Lager 1 gemäß Figur 1 ausgerüstet. Dabei fungiert das Lager 1 als hydraulisches Achslenkerlager. Das Lager 1 ist in der Achsschwinge 11 des Drehgestells 8 montiert und stützt den Radsatz 9 gegen den Drehgestellrahmen 12 ab.

## Patentansprüche

1. Lager (1), umfassend einen Kern (2) und ein Gehäuse (3), wobei zwischen Kern (2) und Gehäuse (3) zumindest ein Elastomerkörper (4) angeordnet ist, wobei der Kern (2), das Gehäuse (3) und der Elastomerkörper (4) einen mit Hydraulikflüssigkeit befüllten Arbeitsraum (5) einschließen, **dadurch gekennzeichnet, dass** in dem Arbeitsraum (5) zumindest ein Zusatzkörper (6) angeordnet ist.

2. Lager nach Anspruch 1, **dadurch gekennzeichnet, dass** das Gehäuse (3) als Hülse ausgebildet ist, welche den Kern (2) mit Abstand umgibt.

3. Lager nach Anspruch 2, **dadurch gekennzeichnet, dass** aus dem Elastomerkörper (4) an jeder Stirnseite des Gehäuses (3) ein ringförmiger Abschnitt (7) ausgebildet ist, der sich jeweils von dem Kern (2) zum Gehäuse (3) erstreckt.

4. Lager nach einem der Ansprüche 1 bis 3, **dadurch gekennzeichnet, dass** der Arbeitsraum (5) zwei Kammern (5a, 5b) aufweist, welche über eine Einrichtung strömungsleitend miteinander verbunden sind, wobei in jeder Kammer (5a, 5b) ein Zusatzkörper (6, 6') angeordnet ist.

5. Lager nach einem der Ansprüche 1 bis 4, **dadurch gekennzeichnet, dass** der Zusatzkörper (6) aus Kunststoff ausgebildet ist.

6. Lager nach einem der Ansprüche 1 bis 4, **dadurch gekennzeichnet, dass** der Zusatzkörper (6) aus metallischem Werkstoff ausgebildet ist.

7. Lager nach einem der Ansprüche 1 bis 6, **dadurch gekennzeichnet, dass** der zumindest eine Zusatzkörper (6) an dem Kern (2) oder an dem Gehäuse (3) befestigt ist.

8. Lager nach einem der Ansprüche 1 bis 7, **dadurch gekennzeichnet, dass** der zumindest eine Zusatzkörper (6) materialeinheitlich und einstückig aus dem Kern (2) und/oder dem Gehäuse (3) ausgebildet ist.

9. Lager nach einem der Ansprüche 1 bis 8, **dadurch gekennzeichnet, dass** der zumindest eine Zusatzkörper (6) das für die Hydraulikflüssigkeit zur Verfügung stehende Volumen des Arbeitsraums (5) um mindestens 50 % verkleinert.

10. Drehgestell (8) eines Schienenfahrzeugs, umfassend zumindest einen Radsatz (9) und zumindest eine Federanordnung (10), wobei die zumindest eine Federanordnung (10) mit zumindest einem Lager (1) nach einem der vorherigen Ansprüche ausgerüstet ist.

11. Drehgestell nach Anspruch 10, **dadurch gekennzeichnet, dass** das Lager (1) als hydraulisches Achslenkerlager fungiert.
